# EUROPEAN PATENT APPLICATION

(11) **EP 2 328 064 A2**
(43) Date of publication of application: **01.06.2011**
(21) Application number: 10175128.7
(22) Date of filing: 02.09.2010
(51) Int. Cl.: G06F 3/033, G06F 1/16

(54) **Information processing apparatus, information processing method, and program**

(30) Priority: 07.09.2009 JP 2009206462
(71) Applicant: Sony Corporation, Tokyo 108-0075 (JP)
(72) Inventor: Kasahara, Shunichi, Tokyo 108-0075 (JP)
(74) Representative: Mills, Julia

(57) **Abstract**

There is provided an information processing apparatus including a display, sensors, and a controller. The display displays a plurality of items on one side of a display screen. The sensors detect an operation input to the one side of the display screen. When contact operation is detected, the controller selects the item displayed near the detection position of the contact operation. Further, when pressing operation with a predetermined pressure is detected in such a state that the item is selected, the controller determines the selection of the item.

## Description

The present invention relates to an information processing apparatus, an information processing method, and a program.

In an information processing apparatus, in general, a graphical user interface (GUI) is operated using a hardware button, a touch panel, and the like.

In the hardware key, since a finger operating a key and the GUI to be operated are separately located, an intuitive operation may be difficult. In the selection and determination operation, the key should be pressed, and thus a quick operation may be hindered.
[Patent Document 1] Japanese Patent Application Laid-Open No. 2007-280461

Meanwhile, in the touch panel, since a finger operating the touch panel and the GUI to be operated are not separately located, the intuitive operation becomes possible. However, in the selection and determination operation, the touch panel should be tapped (a finger is in contact with the touch panel and then separated), and thus a quick operation may be hindered.

In light of the foregoing, it is desirable to provide an information processing apparatus, which facilitates a selection and determination operation of a GUI object, an information processing method, and a program.

Various respective aspects and features of the invention are defined in the appended claims. Combinations of features from the dependent claims may be combined with features of the independent claims as appropriate and not merely as explicitly set out in the claims.

According to an embodiment of the present invention, there is provided an information processing apparatus including a display unit which displays a plurality of items on one side of a display screen, a detection unit which detects an operation input to the one side of the display screen, and a control unit which, when contact operation is detected, selects the item displayed near the detection position of the contact operation, and when pressing operation with a predetermined pressure is detected in such a state that the item is selected, determines the selection of the item.

According to the above configuration, a plurality of items are displayed on one side of a display screen, and an operation input to the one side of the display screen is detected. When contact operation is detected, the item displayed near the detection position of the contact operation is selected. Further, when pressing operation with a predetermined pressure is detected in such a state that the item is selected, the selection of the item is determined. According to this configuration, the item is intuitively selected by the contact operation near the item, and the selected item can be quickly determined by the pressing operation without changing a position of a finger.

According to another embodiment of the present invention, there is provided an information processing method including the steps of displaying a plurality of items on one side of a display screen, detecting an operation input to the one side of the display screen, and when contact operation is detected, selecting the item displayed near the detection position of the contact operation, and when pressing operation with a predetermined pressure is detected in such a state that the item is selected, determining the selection of the item.

According to another embodiment of the present invention, there is provided a program for causing a computer to execute the above information processing method. The program may be provided using a computer-readable recording medium or may be provided through communication means.

According to an embodiment of the present invention, there is provided an information processing apparatus, which can facilitate the selection and determination operation of the GUI object, an information processing method, and a program.

Embodiments of the invention will now be described with reference to the accompanying drawings, throughout which like parts are referred to by like references, and in which:
FIG. 1 is an external view of an information processing apparatus according to an embodiment of the present invention;
FIG. 2 is a block diagram showing a main configuration of the information processing apparatus;
FIG. 3 is a flow chart showing a procedure of selection processing of an item;
FIG. 4 is a view for explaining the selection processing of the item;
FIG. 5A is a view for explaining the selection processing of the item;
FIG. 5B is a view for explaining the selection processing of the item;
FIG 6 is a flow chart showing a procedure of scroll processing of the item;
FIG. 7 is a view for explaining the scroll processing of the item;
FIG. 8 is a view for explaining the scroll processing of the item;
FIG. 9A is a view for explaining the scroll processing of the item;
FIG. 9B is a view for explaining the scroll processing of the item;
FIG. 10A is a view for explaining a variation 1 of an information processing method (application of the selection processing);
FIG. 10B is a view for explaining a variation 1 of an information processing method (application of the selection processing);
F1G 11 is a view for explaining a variation 2 of the information processing method (improvement of movement processing);
FIG. 12 is a view for explaining a variation 2 of the information processing method (improvement of movement processing);
FIG. 13 is a view for explaining a variation 2 of the information processing method (improvement of movement processing);
FIG. 14 is a view for explaining a variation 3 of the information processing method (application of the scroll processing); and
FIG. 15 is a view for explaining a variation 3 of the information processing method (application of the scroll processing).

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

### [1. Configuration of information processing apparatus 100]

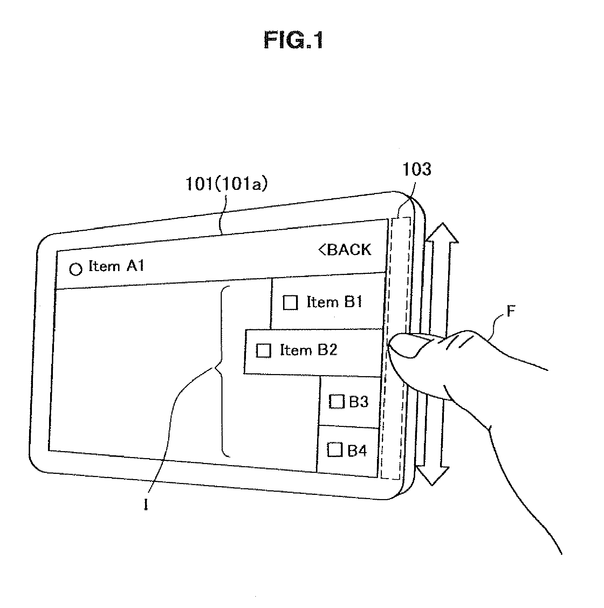

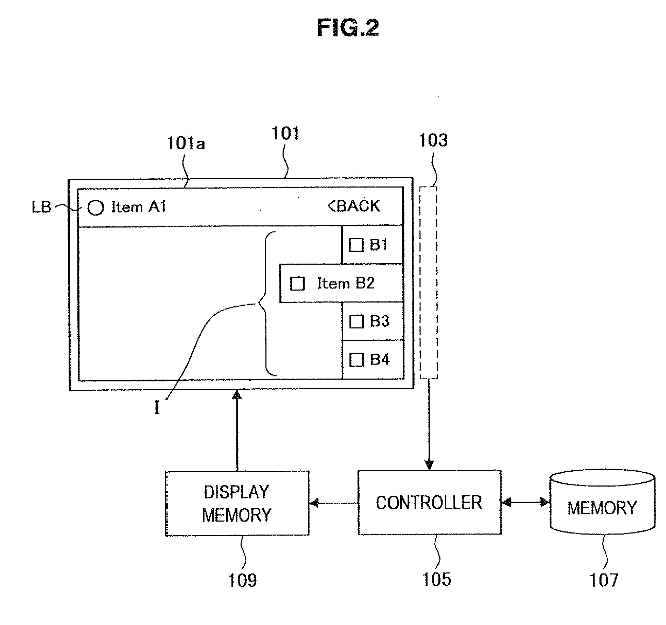

First, a configuration of an information processing apparatus according to an embodiment of the present invention will be described with reference to FIGS. 1 and 2. FIG 1 is an external view of the information processing apparatus, and FIG. 2 is a block diagram showing the main configuration of the information processing apparatus.

As shown in FIG. 1, an information processing apparatus 100 has a display 101 and a sensor 103. The information processing apparatus 100 is a portable information processing apparatus, such as a PDA, a cell phone, a camera, a game machine, and a music player.

The display 101 displays thereon a plurality of items I on one side (for example, the right side) of a display screen 101a. The sensor 103 is provided along at least one side of the display screen 101a and detects an operation input (contact operation, pressing operation, and the like) to one side of the display screen 101a performed by a finger F of a user.

In the information processing apparatus 100, when the contact operation to the sensor 103 is detected, the item I displayed near (for example, the left side of) the contact position is selected. When pressing operation with a predetermined pressure to the sensor 103 is detected in such a state that the item I is selected, the selection of the item I is determined. According to this configuration, a user can intuitively select the item I by the contact operation performed near the item I and can quickly determine the selection by the pressing operation without changing the position of the finger F.

As shown in FIG. 2, the information processing apparatus 100 includes the display 101 (display unit), the sensor 103 (detection unit), a controller 105 (control unit), a memory 107, and a display memory 109. The information processing apparatus 100 may include an operation interface, a communication interface, a speaker, a vibrator, and an acceleration sensor (not shown).

The display 101 displays a selection menu of the items I on the display screen 101a. In the selection menu, a plurality of items I including the GUI object are displayed on the right side of the display screen 101a. The display 101 may be configured as a resistive touch panel, a capacitance touch panel, an optical touch panel, and the like. In this case, the display 101 can substitute for some functions (a contact sensor) of the sensor 103.

The sensor 103 detects the operation input (such as contact operation and pressing operation) to the right side of the display screen 101a.

In the present embodiment, the sensor 103 has an operating surface. The sensor 103 detects a contact state and contact position of a finger to the operating surface, and, at the same time, detects a pressing force of a finger applied to the sensor 103 from the depression of the operating surface. The sensor 103 then supplies the detection result to the controller 105. The sensor 103 may be configured so that the operating surface is provided on the hardware key. In this case, the sensor 103 may detect the pressing force of a finger applied to the sensor 103 from the depression of the hardware key instead of the depression of the operating surface.

In the present embodiment, the sensor 103 is provided outside the display 101 so as to be provided along the right side of the display screen 101a. According to this configuration, it is possible to prevent or at least inhibit a reduction in visibility of the display screen 101a, contamination of the display screen 101a, and the like due to the operation to the display screen 101a. However, the sensor 103 may be provided inside the display 101 so as to serve as part of the touch panel or may be provided on any other side than the right side of the display screen 101a.

The controller 105 includes a CPU, a ROM, and a RAM, and performs calculation processing and control processing necessary for the operation of the information processing apparatus 100. The memory 107 stores programs, data, and the like necessary for the operation of the information processing apparatus 100. The programs include a program for use in performing an information processing method to be described later. More particularly, the memory 107 stores configuration data of a selection menu configured of a plurality of items I having a hierarchical structure and data of the item I configuring each menu. The display memory 109 receives, from the controller 105, data for use in performing various displays on the display screen 101a to hold the received data.

The controller 105 controls the display 101 so that a plurality of the items I are displayed on the right side of the display screen 101a. When the contact operation is detected, the controller 105 performs processing for selecting the item I displayed near the contact position. When the pressing operation with a predetermined pressure is detected in such a state that the item I is selected, the controller 105 performs processing for determining the selection of the item I.

### [2. Information processing method]

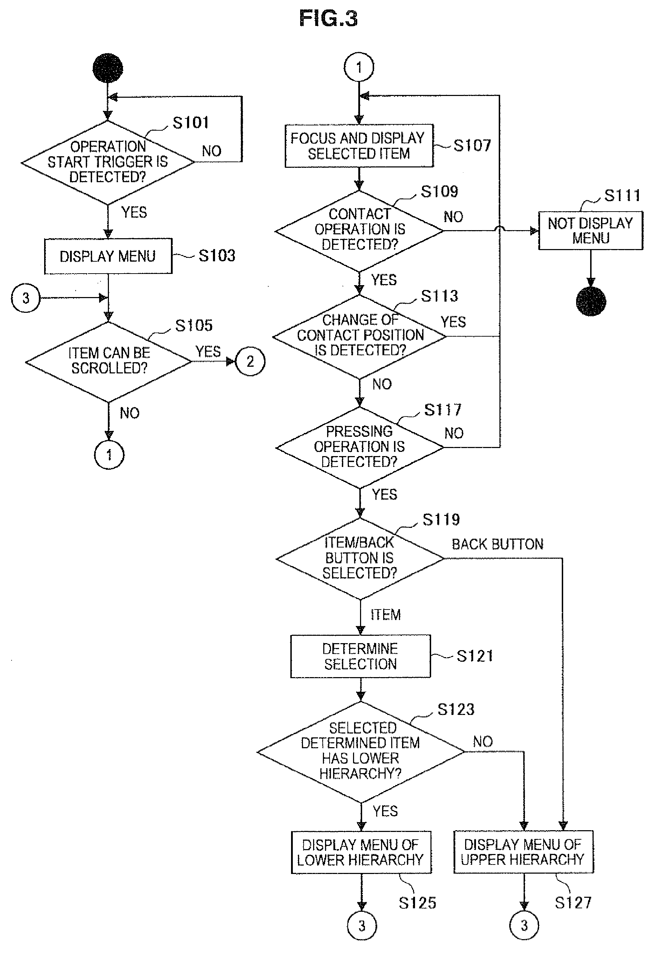

Next, selection processing and scroll processing of the item I, according to the information processing method of an embodiment of the present invention will be described with reference to FIGS. 3 to 9.

### [2-1. Selection processing of item I]

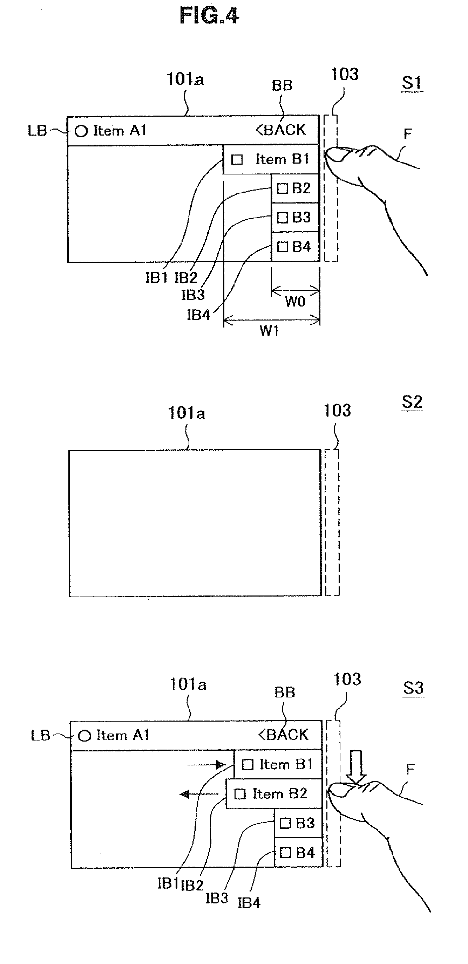

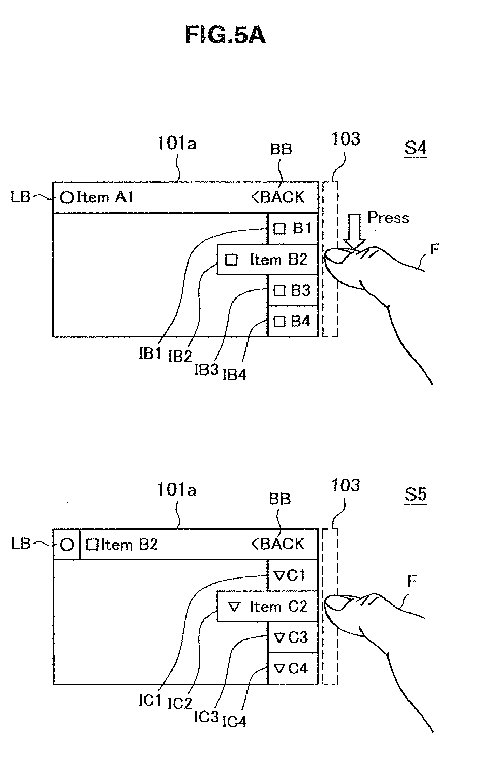

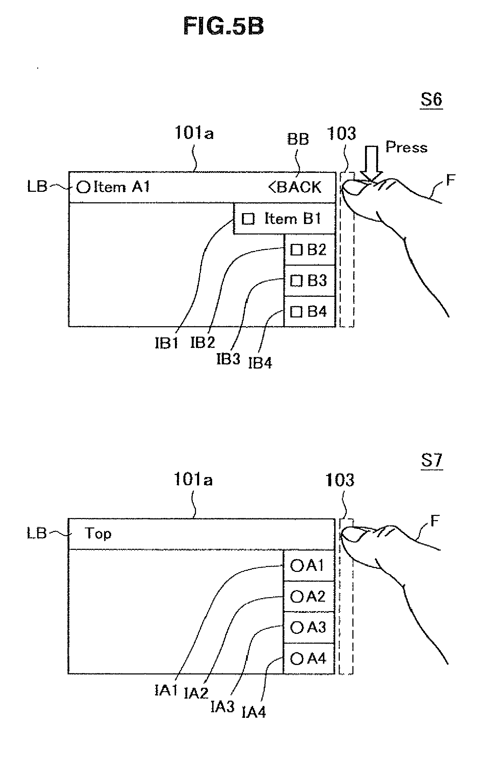

First, the selection processing of the item I will be described with reference to FIGS. 3 to 5. FIG. 3 is a flow chart showing a procedure of the selection processing of the item I. FIGS. 4 and 5 are views for explaining the selection processing of the item I.

The controller 105 determines whether or not an operation start trigger is present (step S101). The trigger is detected in response to, for example, a predetermined operation to the sensor 103, a predetermined operation to the GUI on the display screen 101a, and a predetermined operation to the information processing apparatus 100 (such as, tilting of the information processing apparatus 100). Hereinafter, it is assumed that a case where the trigger is detected in response to the contact operation to the sensor 103.

When the trigger is detected, the controller 105 controls the display 101 so that the display 141 displays a menu based on configuration data of a selection menu (S103). In the menu, the strip-shaped item I is displayed on the right side of the display screen 101a, and a hierarchical display bar LB is displayed on the upper side of the display screen 101a. In the hierarchical display bar LB, in order to specify the hierarchy of the displayed item I (the selected hierarchy), the name of the item I located in the upper hierarchy of the displayed item I is shown.

In FIG. 4, a menu of a hierarchy A1B including four items IB1 to IB4 is displayed. The hierarchy A1B is located in the lower layer of the item Al of a hierarchy A. In the menu, the four items IB1 to IB4 and the hierarchical display bar LB are displayed (state S1). In the hierarchical display bar LB, the hierarchy A "Item A1" that is the upper hierarchy of the displayed hierarchy A1B is displayed, and, at the same time, a back button BB "< BACK" for use in performing movement processing to the upper hierarchy is displayed.

The controller 105 determines whether the item I on the menu can be scrolled to select the following processing (S105). When all of the items I configuring the menu may not be simultaneously displayed on the display screen 101a, it is determined that the item I can be scrolled.

In FIG. 4, since the four items IB1 to IB4 can be simultaneously displayed on the display screen 101a, the processing of step S107 is selected. The number of times I that can be simultaneously displayed on the display screen 101a is not limited to four, but is set according to the size of the display screen 101 a, the size of the item I, and the like.

The controller 105 controls the display 101 so as to focus and display the selected item I (selected item) (S107). The selected item means the item I displayed near the detection position of the contact operation by the finger F.

In FIG. 4, the item IB1 displayed near (for example, on the left side of) the detection position of the contact operation that becomes a trigger is focused and displayed (state S1). The selected item IB1 is displayed while being extended to the left side to have an extended width W1. The non-selected items IB2 to IB4 are displayed with an initial width W0.

The controller 105 determines whether or not the contact operation to the sensor 103 is present (S109). When the contact operation is not present, the controller 105 controls the display 101 so that the menu is not displayed (state S2) (S111) to return to the processing of step S 101.

When the contact operation is present, the controller 105 determines whether or not the contact position is changed (S113). When the contact position is changed, the controller 105 returns to the processing of step S107 to focus and display the item I (selected item) displayed near the changed contact position.

In FIG. 4, the width of the selected item IB2 is gradually increased to the extended width W1, and the width of the prior selected item IB1 is gradually reduced to the initial width W0 (state S3). When the detection position is continuously changed, by virtue of the extending and shrinking of the width of the item I, a plurality of the items I are displayed in an undulating manner.

When the width of the selected item I is extended, it is possible to prevent reduction in visibility of the selected item I due to the finger F located near the selected item 1. Meanwhile, when the width of the non-selected item I is shrunk, it is possible to prevent reduction in visibility of information (not shown), displayed in the center of the display screen 101a, due to the display of the item I.

The controller 105 determines whether or not the pressing operation with a predetermined pressure to the sensor 103 is present (S117). When the pressing operation is present, the controller 105 shifts to the processing of step S 119. When the pressing operation is not present, the controller 105 returns to the processing of step S107.

When the pressing operation is present, the controller 105 determines whether the item I or the back button BB is selected (S119). The back button BB is selected when the contact operation is performed near the hierarchical display bar LB in such a state that the back button BB is displayed. When the item I is selected, the controller 105 determines the selection of the item I (S121).

When the selection of the item I is determined, the controller 105 determines whether the selected determined item I (selected determined item) has the item I of the lower hierarchy (S123). When the selected determined item I has the item I of the lower hierarchy, the controller 105 displays a menu including the item I of the lower hierarchy instead of the currently displayed menu and updates the display of the hierarchical display bar LB (S125).

In FIG. 5A, the item IB2 having the lower hierarchy is selected in the hierarchy A1B, and the pressing operation is performed (state S4). According to this configuration, a menu including items IC1 to IC4 of a hierarchy A1B2C is displayed instead of the hierarchy A1B, and the display of the hierarchical display bar LB is changed to the display of the hierarchy A1B2C ("Item B2") (state S5).

When the selected determined item I does not have the item I of the lower hierarchy, the controller 105 performs processing corresponding to the selected determined item I to display a menu including the item I of the upper hierarchy instead of the currently displayed menu, and, thus, to update the display of the hierarchical display bar LB (S127).

Meanwhile, when the back button BB is selected in the processing of step S119, the controller 105 shifts to the processing of step S127 to display a menu including the item I of the upper hierarchy instead of the currently displayed menu, and, thus, to update the display of the hierarchical display bar LB.

In FIG. 5B, the back button BB is selected in the hierarchy A1B, the pressing operation is performed (state S6). According to this configuration, a menu including items IA1 to IA4 of the hierarchy A is displayed instead of the hierarchy A1B, and the display of the hierarchical display bar LB is changed to "Top" (the highest hierarchy) (state S7).

As described above, according to the selection processing of the item I, the item I can be intuitively selected by the contact operation near the item I, and the selection can be quickly determined by the pressing operation without changing the position of the finger F. Further, by virtue of the pressing operation to the item I and the back button BB, it is possible to easily perform the selection and determination operation of the item I on the selection menu including a plurality of the items I having a hierarchical structure.

In the above description, the selection of the item I or the back button BB is determined by the pressing operation; however, instead of the pressing operation, when the item I or the back button BB is maintained in the selected state over a predetermined period of time, the selection may be determined. In this case, before the elapse of the predetermined period of time, the execution of the selection and determination of the item I of the back button BB may be notified to a user beforehand through, for example, visual means, auditory means, or tactile means.

### [2-2. Scroll processing of item I]

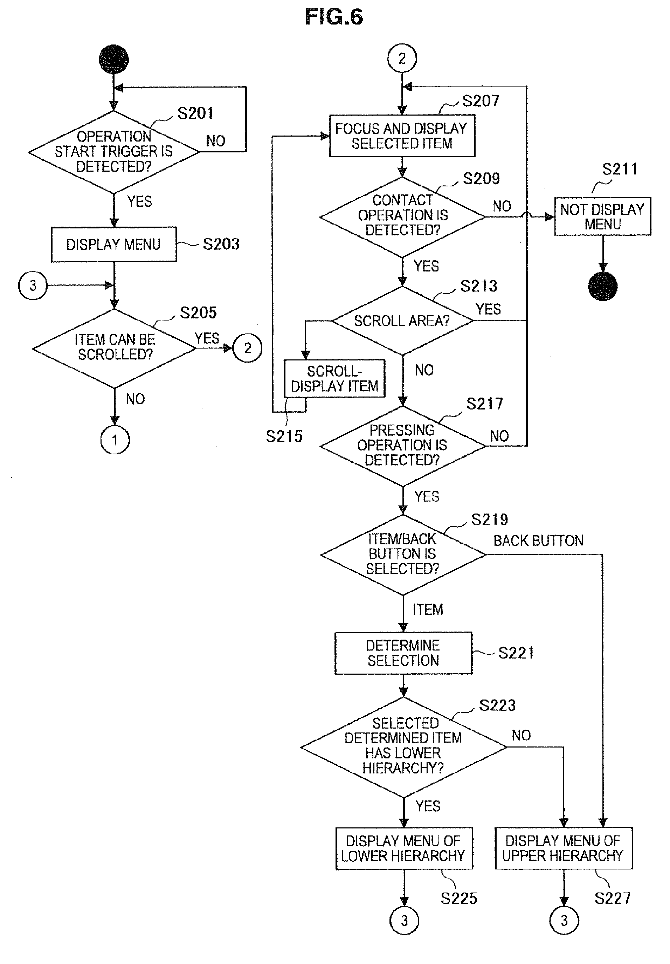

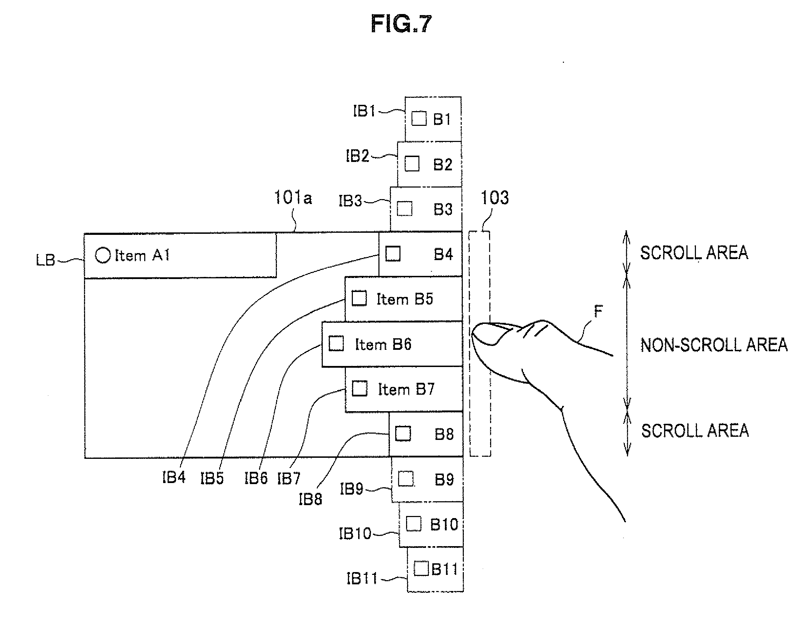

Next, the scroll processing of the item I will be described with reference to FIGS. 6 to 9. FIG. 6 is a flow chart showing a procedure of the scroll processing of the item I. FIGS. 7 to 9 are views for explaining the scroll processing of the item I.

In FIG. 7, the menu in the hierarchy A1B including eleven items IB1 to IB11 is displayed. In the scroll processing of the item I, the display area of the hierarchical display bar LB is reduced on the left side of the display screen 101a, and the five items I can be displayed on the display screen 101 a.

The upper and lower ends of the sensor 103 provided along the right side of the display screen 101a are set as scroll areas, and the center of the sensor 103 is set as a non-scroll area. The controller 105 determines the contact operation to the scroll area as the input of the scroll operation.

In FIG. 7, the items IB4 to IB8 are displayed on the display screen 101a. The sensor areas provided along the display areas of the items IB4 and IB8 are set as the scroll areas, and the sensor area provided along the display area of the items IB5 to IB7 is set as the non-scroll area.

Since the processing of steps S201 and S203 is similar to the selection processing of steps S101 and S103, the processing of step S205 and the subsequent steps will be hereinafter described.

The controller 105 determines whether the item I on the menu can be scrolled to select the following processing (S205). In FIG. 7, since the eleven items IB1 to IB11 may not be simultaneously displayed on the display screen 101a, the processing of step S207 is selected.

The controller 105 focuses and displays the selected item I (S207). The controller 105 determines whether or not the contact operation to the sensor 103 is present (S209). When the contact operation is not present, the controller 105 hides the menu (S211). When the contact operation is present, the controller 105 determines whether the contact position is in the scroll area (S213).

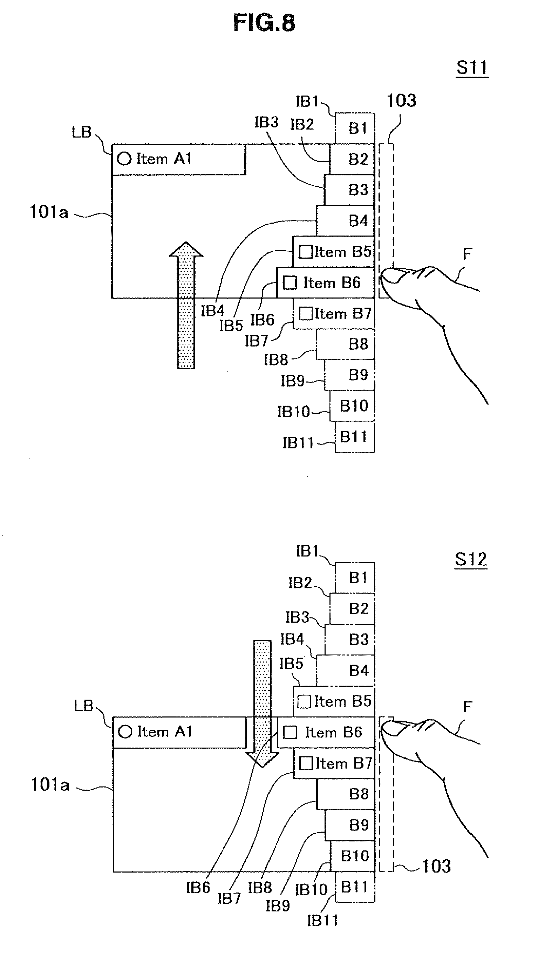

When the contact position is in the scroll area, the controller 105 performs the scroll processing (S215). In the scroll processing, a plurality of the items I are scroll-displayed along the right side of the display screen 101a. As shown in FIG. 8, when the contact position is in the scroll area at the lower end of the sensor 103, the controller 105 controls the display 101 so that the items IB1 to IB11 are scroll-displayed upward (state S11). When the contact position is in the scroll area at the upper end of the sensor 103, the controller 105 controls the display 101 so that the items IB1 to IB11 are scroll-displayed downward (state S 12).

For example, in the state S11 of FIG. 8, the items IB2 to IB6 are first displayed according to the contact operation to the lower end scroll area. When the contact operation is continued, the items IB7 to IB11 are finally displayed. When the contact operation is continued, a plurality of the items I are displayed in an undulating manner according to the change of the selected item I.

The controller 105 may regulate the speed of scrolling the items I in accordance with the detection result (the contact position and the pressing force) of the sensor 103.

For example, the scrolling speed may be regulated so as to become higher as the contact position to the scroll area is closer to the end of the scroll area. The end of the scroll area means the upper end portion of the upper end scroll area and the lower end portion of the lower end scroll area. According to this configuration, the finger F is gradually moved to the center in the scroll area to reduce the scrolling speed, and pressing with a predetermined pressure is finally performed, whereby the item I can be smoothly selected and determined.

The scrolling speed may be regulated so as to become higher as the pressure applied to the scroll area is increased. In order to distinguish from the pressing operation for determining the selection of the item I, the pressure should be less than a predetermined pressure. According to this condition, the degree of pressing is gradually increased to reduce the scrolling speed, and pressing with a predetermined pressure is finally performed, whereby the item I can be smoothly selected and determined.

During the scroll processing, the controller 105 selects the item I displayed near the contact position (the scroll area) as in the case of the selection processing and controls the display 101 so that the selected item I is displayed while increasing in size.

The controller 105 determines whether or not the pressing operation with a predetermined pressure to the scroll area or the non-scroll area is present (S217). Since the processing from step S219 to S227 is similar to the selection processing from step S 119 to S 127, the description will be omitted.

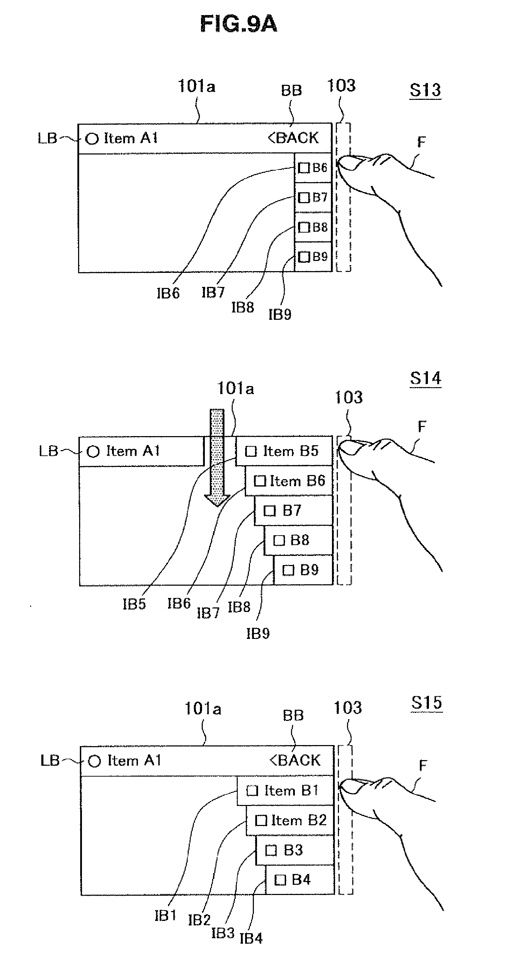

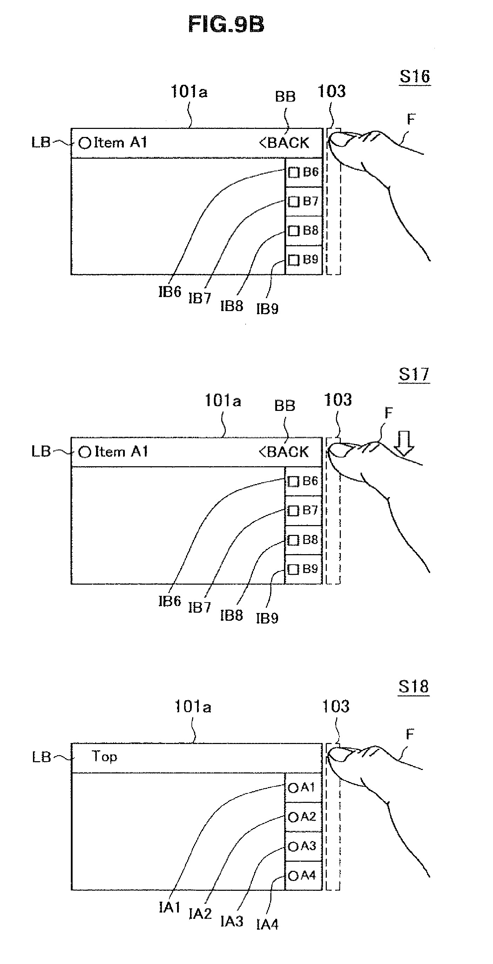

FIGS. 9A and 9B show a relation between the scroll processing and the movement processing to the upper hierarchy.

For example, it is assumed that a case where the four items I (for example, the items IB6 to IB9 of the hierarchy A1B) and the hierarchical display bar LB are displayed in the menu. When the contact operation to the arbitrary item I is detected (state S13 shown in FIG. 9A), the scroll processing is started. When the contact operation to the back button BB is detected (state S16 shown in FIG. 9B), the movement processing is started.

As shown in FIG. 9A, when the scroll processing is started (state S13), the hierarchical display bar LB is reduced in size, the five items I are displayed (state S14). In the scroll processing, the items I are scroll-displayed in the lower direction in response to the contact operation to the upper end scroll area. When the scrolling reaches the upper end to display the item I1, the hierarchical display bar LB returns, and the four items (the items IB1 to IB4) are displayed under the hierarchical display bar LB (state S 15).

Meanwhile, as shown in FIG. 9B, when the movement processing is started (state S16), whether or not the pressing operation to the back button BB is present is determined. When the pressing operation to the back button BB is performed following the contact operation (state S17), the menu in the upper hierarchy (for example, the hierarchy A) is displayed, and, at the same time, the display of the hierarchical display bar LB is updated (state S18).

Of the items I of the upper hierarchy, the item I (for example, the item IA1 of the hierarchy A) selected and determined for the purpose of selecting the last menu (for example, the hierarchy A1B) is displayed under the hierarchical display bar LB. The movement processing is started (state S 16), and when the contact operation to the item I is detected following the contact operation to the back button BB, the transition to the scroll processing is performed (state S 14).

As described above, according to the scroll processing of the items I, a plurality of the items I are scroll-displayed by the contact operation to the scroll area, whereby the selection and determination operation of the item I can be easily performed.

### [3. Variation of information processing method]

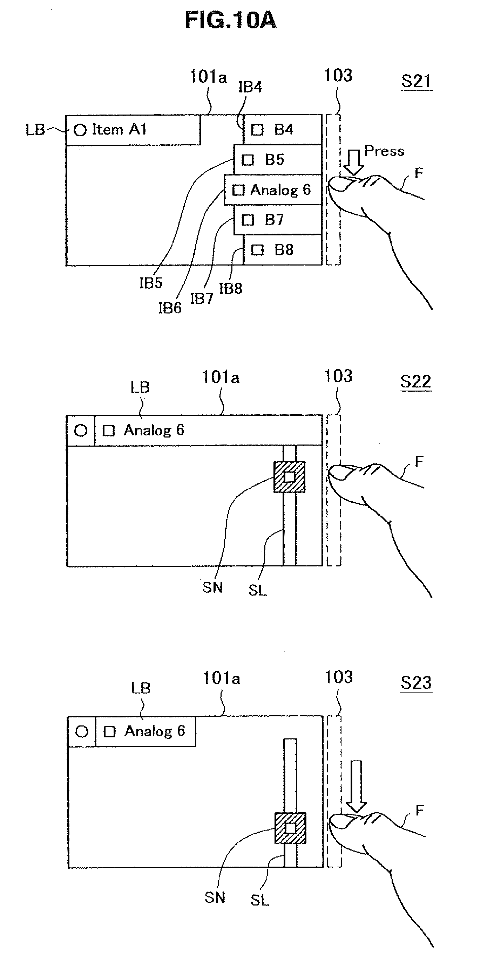

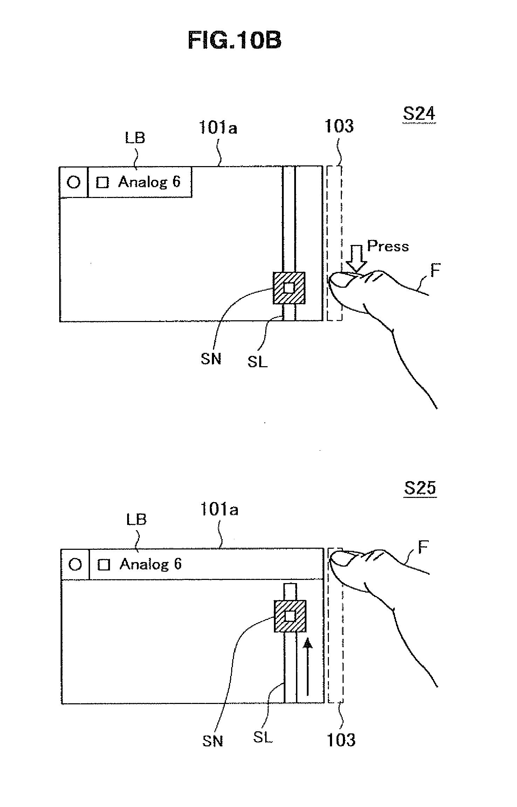

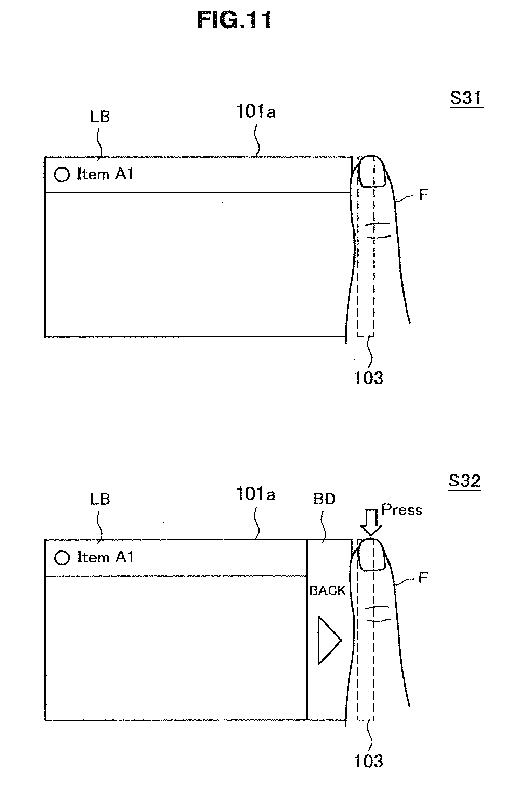

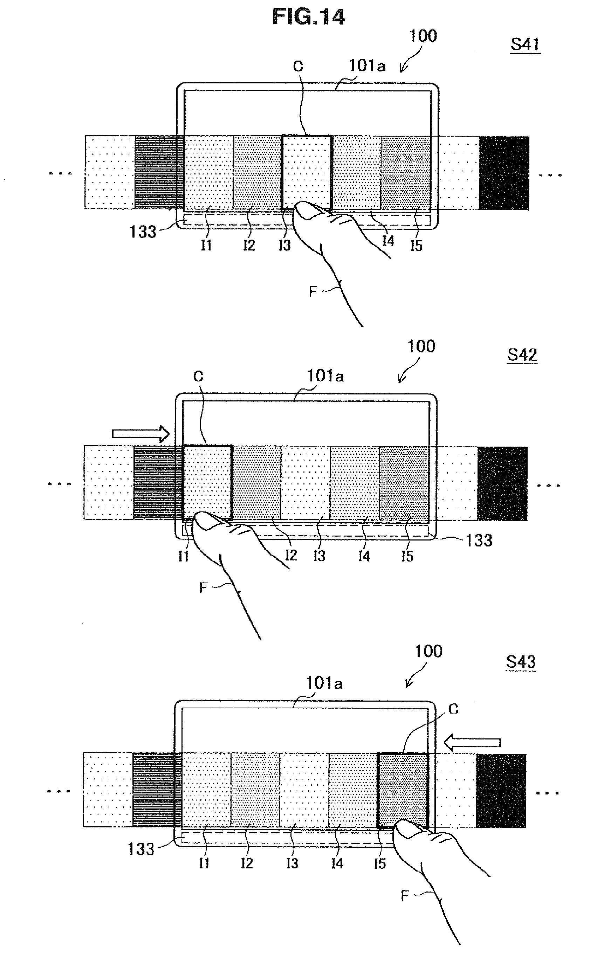

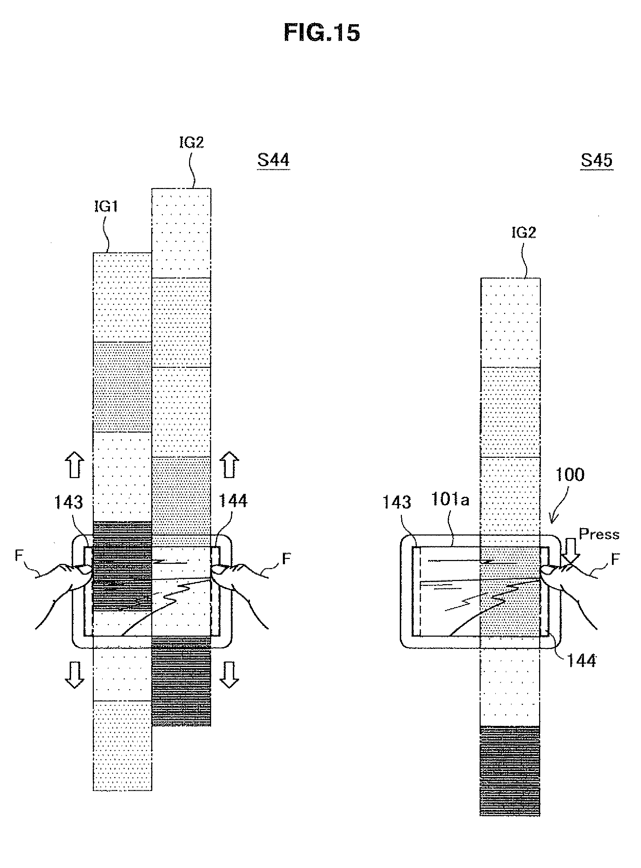

Further, the variation of the information processing method according to an embodiment of the present invention will be described with reference to FIGS. 10 to 15. FIGS. 10A and 10B are views for explaining a variation 1 of the information processing method (application of the selection processing). FIGS. 11 to 13 are views for explaining a variation 2 of the information processing method (improvement of the movement processing). FIGS. 14 and 15 are views for explaining a variation 3 of the information processing method (application of the scroll processing).

### [3-1. Variation 1 (application of selection processing)

FIGS. 10A and 10B show a variation in which the selection processing is applied to the setting of an analog value.

As shown in FIG. 10A, when the item IB6 "Analog 6" for setting is selected and determined on the menu in the hierarchy A1B (state S21), a menu in a hierarchy A1B6C is displayed, and a setting menu of the analogue value is displayed (state S22). In the setting menu, a slider SL with an operating knob SN and the hierarchical display bar LB are displayed.

When the contact operation is detected near the operating knob SN, the operating knob SN is in the selection state, and setting processing is started. When a change of the contact position is detected while the operating knob SN is in the selection state, the operating knob SN is moved and displayed in synchronism with the change of the contact position (state S23).

When a capacitance sensor is used, the detection position is changed according to the inclination and posture of the finger F, and therefore, a setting value can be fine-adjusted. In the setting processing, the slider 8L may be scroll-displayed as in the scroll processing.

As shown in FIG. 10B, when the pressing operation with a predetermined pressure is detected while the operating knob SN is in the selection state (state S24), the setting of the analog value is temporarily determined according to the position of the operating knob SN. When the contact operation is undetectable in the temporarily determined state, the temporarily determined value is determined as the setting value. When a change of the detection position of the contact operation is detected in the temporarily determined state, the setting operation is started again.

Meanwhile, when the contact operation is undetectable while the operating knob SN is in the selection state, the operating knob SN is in a non-selection state. In this case, the setting value returns to the value before the start of the setting processing, and the operating knob SN is displayed while moving to a position corresponding to the setting value (state S25).

### [3-2. Variation 2 (improvement of movement processing)

FIGS. 11 to 13 show a variation in which the movement processing to the upper hierarchy is improved.

In the variation shown in FIG. 11, the start of the movement processing is instructed in response to operation of covering the sensor 103 (detection of not less than a predetermined value of a contact/proximity area) instead of the pressing operation to the back button BB (state S31). When the start of the movement processing is instructed, a message BD showing the start of the processing ("BACK") is displayed over a predetermined period of time. When the pressing operation to the sensor 103 is detected in such a state that the message BD is displayed, the movement processing is performed (state S32).

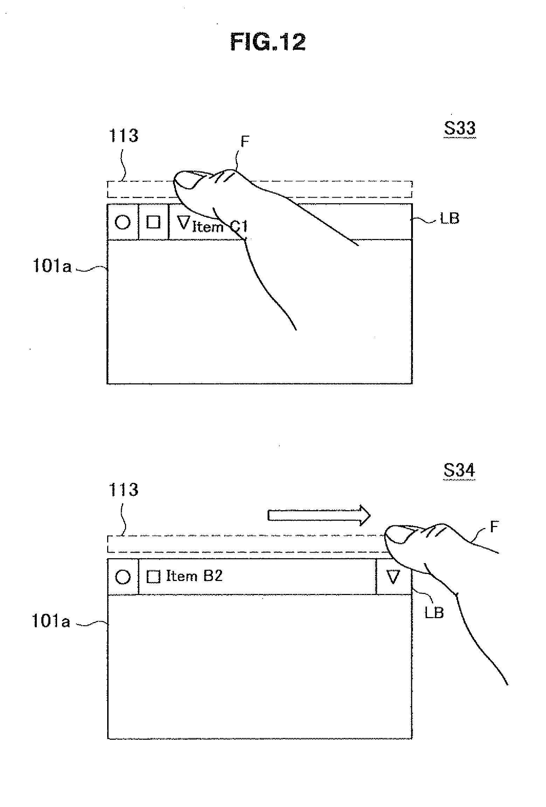

In the variation shown in FIG. 12, instead of the pressing operation to the back button BB, the movement processing is performed according to operation of changing the contact position to a sensor 113 which is provided above the display screen 101 a and along the hierarchical display bar LB. Namely, while the finger F is in a state of being contact with the display area of each hierarchy on or near the display area of the hierarchical display bar LB (state S33), when the operation of shifting the contact position to the right side is performed, the movement processing is performed (state S34). For example, when the contact position is shifted to the right side in such a state that the finger F is in contact with the display area of the hierarchy A1B2C "Item C1", the menu of the hierarchy A1B (not shown) is displayed instead of the hierarchy A1B2C.

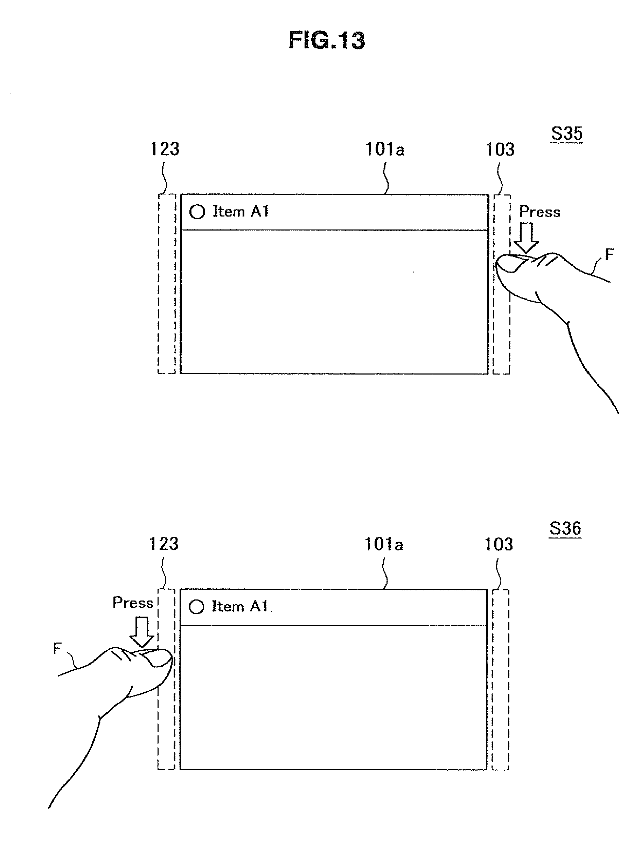

In the variation shown in FIG. 13, instead of the pressing operation to the back button BB, the movement processing is performed according to the pressing operation to a sensor 123 provided on the other side (for example, the left side) of the display screen 101a. Namely, the selection of the item I (the movement processing to the lower hierarchy) is determined by the pressing operation to the sensor 103 (state S35), and the movement processing to the upper hierarchy is performed by the pressing operation to the sensor 123 (state S36). The sensor 123 may be provided not only on the left side of the display screen but also on the upper or lower side thereof.

### [3-3. Variation 3 (application of scroll processing)]

FIGS. 14 and 15 show a variation in which the scroll processing is applied to another object.

In the variation shown in FIG. 14, five items I1 to I5 are horizontally arranged and displayed on the display screen 101a. A sensor 133 is provided along the lower side of the display screen 101a. The scroll areas are set at the left and right ends, and the non-scroll area is set at the center.

When the contact operation to the non-scroll area is performed, the item I near the contact position is selected according to the contact operation to the non-scroll area, and the selection of the item I is determined according to the pressing operation (state S41). On the display screen 101a, a selection cursor C is displayed on the selected item I. When the contact operation to the scroll area at the left end is performed, the item I is displayed while being scrolled in the right direction according to the contact operation to the scroll area at the left end (state S42). Likewise, when the contact operation to the scroll area at the right end is performed, the item I is displayed while being scrolled in the left direction according to the contact operation to the scroll area at the right end (state S43).

In the variation shown in FIG. 15, item columns IG1 and IG2 are arranged and displayed respectively on the left and right sides of the display screen 101a. The item columns IG1 and IG2 are configured of a plurality of items I. Sensors 143 and 144 are provided along the left and right sides of the display screen 101a. The items I included in the item columns IG1 and IG2 are, for example, color filters for use in confirmation of visual effects of image processing.

The left item column IG1 is scroll-displayed in the down/up direction according to the contact operation to the upper/lower portion of the left sensor 143 (state S44). Likewise, the right item column IG2 is scroll-displayed in the down/up direction according to the contact operation to the upper/lower portion of the right sensor 144 (state S44). The selection of the items included in the item columns IG1 and IG2 displayed on the left/right side is determined according to the pressing operation to the left/right sensors 143 and 144 (state S45).

It should be understood by those skilled in the art that various modifications, combinations, sub-combinations and alterations may occur depending on design requirements and other factors insofar as they are within the scope of the appended claims or the equivalents thereof.

The present application contains subject matter related to that disclosed in Japanese Priority Patent Application JP 2009-206462 filed in the Japan Patent Office on September 7,2009.

### CLAUSES

1. An information processing apparatus comprising:
   a display unit which displays a plurality of items on one side of a display screen;
   a detection unit which detects an operation input to the one side of the display screen; and
   a control unit which, when contact operation is detected, selects the item displayed near the detection position of the contact operation, and when pressing operation with a predetermined pressure is detected in such a state that the item is selected, determines the selection of the item.
2. The information processing apparatus according to clause 1, wherein the control unit controls the display unit so that the display area of the selected item is increased in size to the opposite side of the one side of the display screen.
3. The information processing apparatus according to clause 1, wherein the display unit displays a slider, including an operating knob, on the one side of the display screen, and
   when the contact operation is detected in such a state that the operating knob is selected, the control unit moves the operating knob on the slider to the vicinity of the detection position of the contact operation, and when the pressing operation with the predetermined pressure is detected in such a state that the operating knob is selected, the control unit sets an input value corresponding to the position of the operating knob.
4. The information processing apparatus according to clause 1, wherein the detection unit is provided along the one side of the display screen and outside the display screen.
5. The information processing apparatus according to clause 1, wherein when contact operation is detected near an item over a predetermined period of time, the control unit determines the selection of the item.

## Claims

1. An information processing apparatus comprising:
a display unit which displays a plurality of items on one side of a display screen;
a detection unit which detects an operation input to the one side of the display screen; and
a control unit which, when contact operation is detected, selects the item displayed near the detection position of the contact operation, and when pressing operation with a predetermined pressure is detected in such a state that the item is selected, determines the selection of the item.

2. The information processing apparatus according to claim 1, wherein the plurality of items have a hierarchical structure, and
the control unit selects a hierarchy according to a predetermined operation input and controls the display unit so that the item of the selected hierarchy is displayed on the one side of the display screen.

3. The information processing apparatus according to claim 2, wherein the control unit controls the display unit so that hierarchy information for use in specification of the selected hierarchy is displayed.

4. The information processing apparatus according to claim 2, wherein when the item of a predetermined hierarchy is selected and determined, and when there is a hierarchy lower than the selected determined item, the control unit controls the display unit so that the item of the lower hierarchy is displayed instead of the predetermined hierarchy.

5. The information processing apparatus according to claim 2, wherein when there is a hierarchy upper than the selected hierarchy, the control unit controls the display unit so that an operation item for use in designation of movement to the upper hierarchy is displayed at the end of the one side of the display screen, and
further when the operation item is selected and determined in the selected hierarchy, the control unit controls the display unit so that the item of the upper hierarchy is displayed instead of the selected hierarchy.

6. The information processing apparatus according to claim 5, wherein when contact operation with a predetermined contact area is detected in the selected hierarchy, the control unit controls the display unit so that the item of the upper hierarchy is displayed instead of the selected hierarchy.

7. The information processing apparatus according to claim 5, further comprising another detection unit which detects an operation input to the vicinity of a display area of the hierarchy information, and wherein,
according to the contact operation to the vicinity of the display area of the hierarchy information, the control unit controls the display unit so that the item of the upper hierarchy is displayed instead of the selected hierarchy.

8. The information processing apparatus according to claim 5, further comprising another detection unit which detects an operation input to another side different from the one side of the display screen, wherein
when the pressing operation is detected by the another detection unit in the selected hierarchy, the control unit controls the display unit so that the item of the upper hierarchy is displayed instead of the selected hierarchy.

9. The information processing apparatus according to claim 1, wherein according to a predetermined operation input, the control unit controls the display unit so that the plurality of items are scroll-displayed on the one side of the display screen.

10. The information processing apparatus according to claim 2, wherein when the contact operation is detected at one or the other end of the one side of the display screen, the control unit controls the display unit so that the plurality of items are displayed while being scrolled to the opposite side of the side corresponding to the contact position.

11. The information processing apparatus according to claim 10, wherein when the pressing operation is detected at one or the other end of the one side of the display screen, the control unit controls the display unit so that as the detection position of the pressing operation is closer to the end on one side, the speed of scroll-displaying the plurality of items is increased.

12. The information processing apparatus according to claim 10, wherein when the pressing operation with less than the predetermined pressure is detected at one or the other end of the one side of the display screen, the control unit controls the display unit so that as the pressure of the pressing operation becomes larger, the plurality of items are displayed while scrolling at higher speed.

13. The information processing apparatus according to claim 9, wherein when the hierarchy information is displayed at one end of the one side of the display screen, and when the plurality of items are scroll-displayed, the control unit controls the display unit so that the display area of the hierarchy information is reduced in size to the opposite side of the one side of the display screen.

14. An information processing method comprising the steps of:
displaying a plurality of items on one side of a display screen;
detecting an operation input to the one side of the display screen; and
when contact operation is detected, selecting the item displayed near the detection position of the contact operation, and when pressing operation with a predetermined pressure is detected in such a state that the item is selected, determining the selection of the item.

15. A program for causing a computer to execute an information processing method which comprises the steps of:
displaying a plurality of items on one side of a display screen;
detecting an operation input to the one side of the display screen; and
when contact operation is detected, selecting the item displayed near the detection position of the contact operation, and when pressing operation with a predetermined pressure is detected in such a state that the item is selected, determining the selection of the item.
